(19) Europäisches Patentamt
European Patent Office
Office européen des brevets

(11) **EP 4 687 104 A1**

(12) **EUROPEAN PATENT APPLICATION**

(43) Date of publication:
**04.02.2026 Bulletin 2026/06**

(21) Application number: **24211368.6**

(22) Date of filing: **07.11.2024**

(51) International Patent Classification (IPC):
***G06T 11/60*** *(2026.01)*

(52) Cooperative Patent Classification (CPC):
**G06T 11/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.08.2024 KR 20240102748**

(71) Applicant: **Seoul National University R & DB
Foundation
Seoul 08826 (KR)**

(72) Inventors:
• **SHIN, Joonghyuk**
  **08826 Seoul (KR)**
• **PARK, Jaesik**
  **08826 Seoul (KR)**

(74) Representative: **Isarpatent
Patent- und Rechtsanwälte
Barth Hassa Peckmann & Partner mbB
Friedrichstraße 31
80801 München (DE)**

(54) **APPARATUS AND METHOD FOR DRAG-BASED IMAGE EDITING**

(57)    Proposed are an image editing apparatus and method. According to an aspect of the present invention, there is provided an image editing apparatus including: an input/output interface configured to obtain a drag input instruction and an image; and a controller configured to obtain an optical flow based on the drag input instruction and the image by using a first artificial intelligence model that is trained to receive a drag input instruction and an image as input and output an optical flow, to input the optical flow and the image to a second artificial intelligence model that is different from the first artificial intelligence model, thereby obtaining an edited image as an output of the second artificial intelligence model, and to provide the edited image.

**FIG. 1**

100

EP 4 687 104 A1

**Description**

BACKGROUND

1. Technical Field

The embodiments disclosed herein relate to a drag-based image editing apparatus and method, and more particularly, to an apparatus and method that process drag input instruction-based image editing requests by using artificial intelligence.

The embodiments disclosed herein were derived as a result of the research on the task "Artificial Intelligence Graduate School Program (Seoul National University)" (task management number: IITP-2021-0-01343) of the Information, Communications and Broadcasting Innovative Talent Nurturing Project that was sponsored by the Korean Ministry of Science and ICT and the Institute of Information & Communications Technology Planning & Evaluation.

2. Description of the Related Art

Recently, the image editing program market has been growing steadily. In particular, the demand for artificial intelligence-based image editing techniques is increasing considerably rapidly. In particular, the demand for drag-based image editing techniques is increasing. A drag-based editing technique is a generative artificial intelligence-based image editing technique in which, when a user drags a specific portion of an image with a mouse to move it to a desired location, a system automatically adjusts the remaining portions naturally while taking into consideration realistic motions.

The drag-based image editing method is a considerably intuitive and precise controllable technique that can be widely used by both experts and general users, and is also a technique that is significantly suitable for touch-based mobile environments due to its "dragging" characteristic. However, a conventional drag-based image editing method requires lots of computation and memory because it is necessary to take into consideration realistic motions inherent in an image, and thus, additional optimization and training are required for each individual image, and has an inconvenience because the conventional drag-based image editing method requires a user to input text related to an image or a mask indicating a movable area personally.

Meanwhile, Korean Patent Application Publication No. 10-2014-0120628 (published on October 14, 2014), which is a related art document, is an invention relating to an image editing method and apparatus, which may include determining a main image, receiving an input for determining an object, displaying the object on the screen of a mobile device, receiving a touch input for the object, displaying a menu for the object on the screen, receiving a first drag input for changing a touch point, displaying a main image in a first area when the touch point is positioned on the menu, displaying an icon at the touch point as an overlay on the main image, receiving a second drag input for positioning an icon at a point of the main image, and generating an object insertion image into which the object is inserted when the touch input is terminated. This conventional art proposes a technique for editing images using drag input, but it still does not suggest how to improve a resource-intensive image editing process. In addition, it only inserts one image into another image, so that it does not suggest how to implement the corresponding technique when an image is edited in response to drag input on the image. Therefore, there is a demand for the technology that can edit images with satisfactory quality through real-time level interaction while requiring small amounts of computation and memory.

Meanwhile, the above-described background technology corresponds to technical information that has been possessed by the present inventor in order to contrive the present invention or that has been acquired in the process of contriving the present invention, and can not necessarily be regarded as well-known technology that had been known to the public prior to the filing of the present invention.

SUMMARY

An object of the embodiments disclosed herein is to propose an apparatus and method that edit images based on drags.

An object of the embodiments disclosed herein is to propose a real-time drag-based image editing apparatus and method that may naturally move and edit an object in an image in response to a user's drag input.

An object of the embodiments disclosed herein is to propose an image editing apparatus and method that may perform real-time level interaction with a small amount of memory.

An object of the embodiments disclosed herein is to propose an image editing apparatus and method that may perform real-time level interaction while performing high-quality editing without additional information.

An object of the embodiments disclosed herein is to propose an image editing apparatus and method that may perform high-quality editing at a high speed without optimization, unlike conventional optimization-based schemes.

An object of the embodiments disclosed herein is to propose an image editing apparatus and method that may perform editing at a high speed while reflecting detailed motions therein by learning natural motions inherent in daily life through a video dataset.

An object of the embodiments disclosed herein is to propose a fast and user-friendly image editing apparatus and method by newly proposing and training a specialized model itself specialized in drag-based editing, rather than optimizing a pre-trained large model at an editing time in time.

According to an aspect of the present invention, there is provided an image editing apparatus including: an input/output interface configured to obtain a drag input instruction and an image; and a controller configured to obtain an optical flow based on the drag input instruction and the image by using a first artificial intelligence model that is trained to receive a drag input instruction and an image as input and output an optical flow, to input the optical flow and the image to a second artificial intelligence model that is different from the first artificial intelligence model, thereby obtaining an edited image as an output of the second artificial intelligence model, and to provide the edited image.

According to another aspect of the present invention, there is provided an image editing method, the image editing method being performed by an image editing apparatus, the image editing method including: obtaining a drag input instruction and an image; obtaining an optical flow based on the drag input instruction and the image by using a first artificial intelligence model that is trained to receive a drag input instruction and an image as input and output an optical flow; inputting the optical flow and the image to a second artificial intelligence model that is different from the first artificial intelligence model, thereby obtaining an edited image as an output of the second artificial intelligence model; and providing the edited image.

According to still another aspect of the present invention, there is provided a non-transitory computer-readable storage medium having stored thereon a program that, when executed by a processor, causes the processor to execute an image editing method, wherein the image editing method includes: obtaining a drag input instruction and an image; obtaining an optical flow based on the drag input instruction and the image by using a first artificial intelligence model that is trained to receive a drag input instruction and an image as input and output an optical flow; inputting the optical flow and the image to a second artificial intelligence model that is different from the first artificial intelligence model, thereby obtaining an edited image as an output of the second artificial intelligence model; and providing the edited image.

According to still another aspect of the present invention, there is provided a computer program that is executed by an image editing apparatus and stored in a non-transitory computer-readable storage medium to perform an image editing method, wherein the image editing method includes: obtaining a drag input instruction and an image; obtaining an optical flow based on the drag input instruction and the image by using a first artificial intelligence model that is trained to receive a drag input instruction and an image as input and output an optical flow; inputting the optical flow and the image to a second artificial intelligence model that is different from the first artificial intelligence model, thereby obtaining an edited image as an output of the second artificial intelligence model; and providing the edited image.

According to some of the above-described solutions, there may be proposed the apparatus and method that edit images based on drags.

According to some of the above-described solutions, there may be proposed the real-time drag-based image editing apparatus and method that may naturally move and edit an object in an image in response to a user's drag input.

According to some of the above-described solutions, there may be proposed the image editing apparatus and method that may perform real-time level interaction with a small amount of memory. That is, there may be proposed the image editing apparatus and method that may be implemented on various hardware because they can perform real-time processing and require small computing resources.

According to some of the above-described solutions, there may be proposed the image editing apparatus and method that may perform real-time level interaction while performing high-quality editing without additional information.

According to some of the above-described solutions, there may be proposed the image editing apparatus and method that may perform high-quality editing at a high speed without optimization, unlike conventional optimization-based schemes. That is, there may be proposed the image editing apparatus and method that enable sophisticated drag editing by using only simple drag instructions and an image without requiring a mask or additional text information and is 10 to 100 times faster and uses up to 5 times less GPU memory than conventional technologies because an optimization process requiring a lot of computation for each individual image is omitted.

According to some of the above-described solutions, there may be proposed the image editing apparatus and method that may perform editing at a high speed while reflecting detailed motions therein by learning natural motions inherent in daily life through a video dataset.

According to some of the above-described solutions, there may be proposed the fast and user-friendly image editing apparatus and method by newly proposing and training a specialized model itself specialized in drag-based editing, rather than optimizing a pre-trained large model at an editing time in time.

The advantages that can be achieved by the embodiments disclosed herein are not limited to the advantages described above, and other advantages not described above will be clearly understood by those having ordinary skill in the art, to which the embodiments disclosed herein pertain, from the foregoing description.

BRIEF DESCRIPTION OF THE DRAWINGS

The above and other objects, features, and advantages of the present invention will be more clearly understood from the following detailed description taken in conjunction with the accompanying drawings, in which:

FIG. 1 is a diagram of a system configuration illustrating an image editing apparatus according to an embodiment;
FIG. 2 is a block diagram illustrating an image editing apparatus according to an embodiment;
FIGS. 3 to 9 are exemplary diagrams illustrating an image editing apparatus according to an embodiment;
FIG. 10 is a flowchart illustrating an image editing method according to an embodiment; and
FIGS. 11 to 12 are exemplary diagrams illustrating an image editing method according to an embodiment.

DETAILED DESCRIPTION

Various embodiments will be described in detail below with reference to the accompanying drawings. The following embodiments may be modified to various different forms and then practiced. In order to more clearly illustrate features of the embodiments, detailed descriptions of items that are well known to those having ordinary skill in the art to which the following embodiments pertain will be omitted. Furthermore, in the drawings, portions unrelated to descriptions of the embodiments will be omitted. Throughout the specification, like reference symbols will be assigned to like portions.
Throughout the specification, when one component is described as being "connected" to another component, this includes not only a case where the one component is 'directly connected' to the other component but also a case where the one component is 'connected to the other component with a third component arranged therebetween.' Furthermore, when one portion is described as "including" one component, this does not mean that the portion does not exclude another component but means that the portion may further include another component, unless explicitly described to the contrary.
Embodiments will be described in detail below with reference to the accompanying drawings.

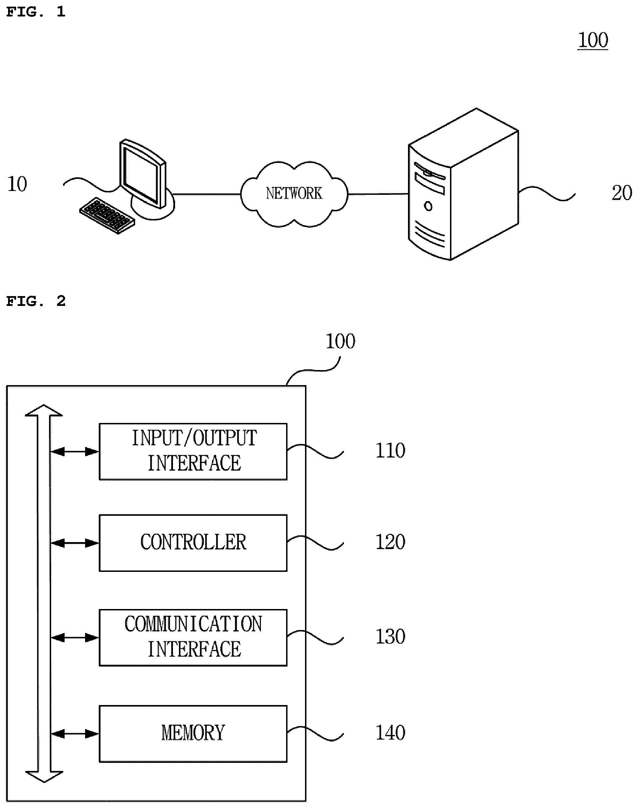

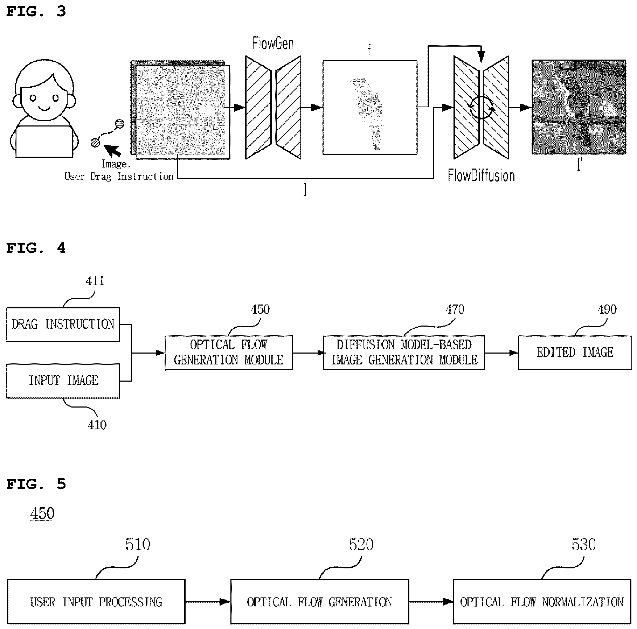

FIG. 1 is a diagram of a system configuration illustrating an image editing apparatus 100 according to an embodiment, and FIG. 2 is a block diagram illustrating an image editing apparatus 100 according to an embodiment. FIGS. 3 to 9 are exemplary diagrams illustrating an image editing apparatus according to an embodiment. When an image editing apparatus is described, reference will be made to FIGS. 3 to 9.
The image editing apparatus 100 is an apparatus for editing images based on user drag instructions. That is, the image editing apparatus 100 may be a drag-based image editing artificial intelligence apparatus capable of real-time interaction.
This image editing apparatus 100 may be implemented as a user terminal, a server, or a server-client system.
According to an embodiment, when the image editing apparatus 100 is implemented as a user terminal, all the operations of the image editing apparatus 100 to be described below may be performed in the user terminal. In contrast, when the image editing apparatus 100 is implemented as a server, all the operations of the image editing apparatus 100 to be described below may be performed in the server.
According to still another embodiment, the image editing apparatus 100 includes a user terminal 10 and a server 20, as shown in FIG. 1, and may be implemented as a server-client system while communicating over a network.
In this case, the user terminal 10 may be implemented as a computer, a mobile terminal, a television, a wearable device, or the like that can access a remote server or connect with another terminal and a server over a network. In this case, the computer includes, e.g., a notebook, a desktop, a laptop, and the like each equipped with a web browser. The mobile terminal is, e.g., a wireless communication device capable of guaranteeing portability and mobility, and may include all types of handheld wireless communication devices, such as a Personal Communication System (PCS) terminal, a Personal Digital Cellular (PDC) terminal, a Personal Handyphone System (PHS) terminal, a Personal Digital Assistant (PDA), a Global System for Mobile communications (GSM) terminal, an International Mobile Telecommunication (IMT)-2000 terminal, a Code Division Multiple Access (CDMA)-2000 terminal, a W-Code Division Multiple Access (W-CDMA) terminal, a Wireless Broadband (Wibro) Internet terminal, a smartphone, a Mobile Worldwide Interoperability for Microwave Access (mobile WiMAX) terminal, and the like. Furthermore, the television may include an Internet Protocol Television (IPTV), an Internet Television (Internet TV), a terrestrial TV, a cable TV, and the like. Moreover, the wearable device is an information processing device of a type that can be directly worn on a human body, such as a watch, glasses, an accessory, clothing, shoes, or the like, and can access a remote server or connect with another terminal directly or via another information processing device over a network.
In addition, the server 20 may be implemented as a computer capable of communicating with the user terminal 10 over a network, or may be implemented as a cloud computing server. When the image editing apparatus 100 is implemented as a server-client, the components constituting the image editing apparatus 100 may be implemented on the user terminal 10 and the server 20.
Meanwhile, referring to FIG. 2, the image editing apparatus 100 may include an input/output interface 110, a controller 120, a communication interface 130, and memory 140.

The input/output interface 110 may include an input interface configured to receive input from a user and an output interface configured to display information such as the result of the performance of a task or the status of the image editing apparatus 100. For example, the input/output interface 110 may include an operation panel configured to receive user input and a display panel configured to display screens.

More specifically, the input interface may include devices capable of receiving various types of user input such as a keyboard, physical buttons, a touch screen, a camera, and/or a microphone. Furthermore, the output interface may include a display panel, and/or a speaker. However, the input/output interface 110 is not limited thereto, and may include components capable of supporting various types of input/output.

According to an embodiment, the input/output interface 110 may obtain a drag input instruction and an image. For example, the input/output interface 110 may obtain a user's drag input instruction for an output image when the image is output, and may transmit the output image and the drag input instruction for the corresponding image to the controller 120.

The controller 120 may control the overall operation of the image editing apparatus 100, and may include a processor such as a central processing unit (CPU) or a graphics processing unit (GPU). The controller 120 may control other components included in the image editing apparatus 100 to perform operations corresponding to the user input received through the input/output interface 110.

For example, the controller 120 may execute a program stored in the memory 140, may read a file stored in the memory 140, and may store a new file in the memory 140.

The controller 120 will be described in more detail below.

The communication interface 130 may perform wired/wireless communication with another device or a network. To this end, the communication interface 130 may include a communication module configured to support at least one of various wired/wireless communication methods. For example, the communication module may be implemented in the form of a chipset.

The wireless communication supported by the communication interface 130 may be, e.g., Wireless Fidelity (Wi-Fi), Wi-Fi Direct, Bluetooth, Ultra-Wide Band (UWB), or Near Field Communication (NFC). Furthermore, the wired communication supported by the communication interface 130 may be, e.g., Universal Serial Bus (USB), or High Definition Multimedia Interface (HDMI).

Various types of data such as a file, an application, and a program may be installed and stored in the memory 140. The controller 120 may access and use the data stored in the memory 140, or may store new data in the memory 140. Furthermore, the controller 120 may execute a program installed in the memory 140. A program for performing an image editing method may be installed in the memory 140.

According to an embodiment, the memory 140 may store a model for each of an optical flow generation module and a diffusion model-based image generation module. In this case, each of the optical flow generation module and the diffusion model-based image generation module may be trained based on video image data present in the real world. During this process, the learned motion may be generalized and reflected in the input image of a user.

According to an embodiment, when a user drag instruction input for an image is received from a user through the input/output interface 110, the controller 120 may execute a program stored in the memory 140 and output an edited image in which a drag for the image is reflected.

Meanwhile, the controller 120 according to an embodiment may generate an edited image in which an input image is edited based on a user drag instruction and an image.

The image editing apparatus 100 trained through real-world motions inherent in video data may include an optical flow generation model (FlowGen) based on a generative adversarial network (GAN) and an image generation model (FlowDiffusion) based on a diffusion model. Hereinafter, in the present specification, the terms "optical flow generation module," "optical flow generation model," and "FlowGen" may be used interchangeably and interpreted as having the same meaning. Furthermore, the terms "diffusion model-based image generation module," "diffusion model-based image generation model," and "FlowDiffusion" may be used interchangeably and interpreted as having the same meaning.

FlowGen generates appropriate motions based on the input images and user drag instructions of a user, and FlowDiffusion plays a role in newly generating actual images based on the generated motions. That is, the controller 120 may obtain optical flow based on a drag input instruction and an image by using FlowGen, which is trained to input a drag input instruction and an image and output an optical flow, and may obtain an output edited image by inputting the image and the optical flow to FlowDiffusion, which is different from FlowGen.

As described above, drag-based image editing is divided into and established based on two well-designed modules and training on natural motions is performed through video data, so that the inference speed is accelerated, memory usage is minimized, and image synthesis reflecting natural motions therein may be achieved without additional user input (e.g., a text prompt) other than a user drag instruction. FlowGen, which is a GAN-based model that is fast but has difficulty in generating complex data having relatively high quality, and FlowDiffusion, which is a diffusion model-based model that is slow but can generate relatively high quality data, are effectively linked with each other, so that the advantages of the individual neural networks are utilized. An edited image in which a user drag instruction for an image is reflected may be generated using these two different models, so that image editing can be performed through the simple forwarding operation of a neural network without optimization. Accordingly, an image may be edited at a fast speed of about 1 second even on a general consumer GPU (RTX 3090), and the memory required for the operation is about 3GB, so that the present method is about 75 times faster and uses 3.5 times less memory than the DragDiffusion method, which is a conventional technology.

More specifically, as shown in FIG. 3, when a user inputs a user drag instruction together with an image I, the optical flow generation model (FlowGen) estimates a dense optical flow $f$, and the diffusion model-based image generation model (FlowDiffusion) edits an original image through flow guidance. According to an embodiment disclosed in the present specification, auxiliary input such as text or a foreground mask is not required and inversion and optimization are not required, so that an edited image I' can be provided in a short period of time (about 1 second).

As shown in FIG. 4, the controller 120 may include an optical flow generation module (FlowGen) 450 and a diffusion model-based image generation module (FlowDiffusion) 470. Accordingly, as shown in FIG. 4, when an input image 410 to be edited and a user drag instruction 411 are obtained, the input image 410 and the user drag instruction 411 are input to the optical flow generation module 450, and then a result is input to the diffusion model-based image generation module 470, thereby obtaining an edited image 490.

In this case, the optical flow generation module (FlowGen) 450 may be a GAN-based network for motion generation. FlowGen is a newer approach for generating a motion vector field based on an optical flow representation from an image.

In this case, the controller 120 trains FlowGen, which is composed of the generator and discriminator of a GAN, so that the generator generates a fake synthetic optical flow based on an input image and a conditional drag input and the discriminator performs a process of distinguishing between the fake optical flow and a genuine optical flow, thereby training FlowGen.

That is, as shown in FIG. 5, FlowGen may include a user input processor 510 configured to obtain a user drag instruction and an input image and changes the user drag instruction into an appropriate sparse optical flow vector, an optical flow generator 520 configured to generate an optical flow based on a GAN, and a normalizer 530 configured to normalize the generated optical flow. In contrast to FlowDiffusion, which will be described later, FlowGen is trained on normalized data in a different manner, so that FlowGen can newly process normalization at the end. Since the optical flow output through the normalizer 530 is input to FlowDiffusion, the normalizer 530 may perform fixed-size normalization on the optical flow.

FlowGen is responsible for generating an appropriate optical flow based on an input image and a user drag input. This is based on the structure of the model proposed in the study of Pix2Pix ((Isola et al. 2017. Image-To-Image Translation With Conditional Adversarial Networks. In IEEE Conference on Computer Vision and Pattern Recognition (CVPR))) among GAN structures, and group normalization is used instead of instance normalization in the generator and the discriminator and model sizes are increased by stacking layers deeper based on the latest research results. That is, group normalization is used instead of instance normalization to accelerate training and increase model capacity for a large dataset, and a deeper architecture is utilized for a PatchGAN-based discriminator.

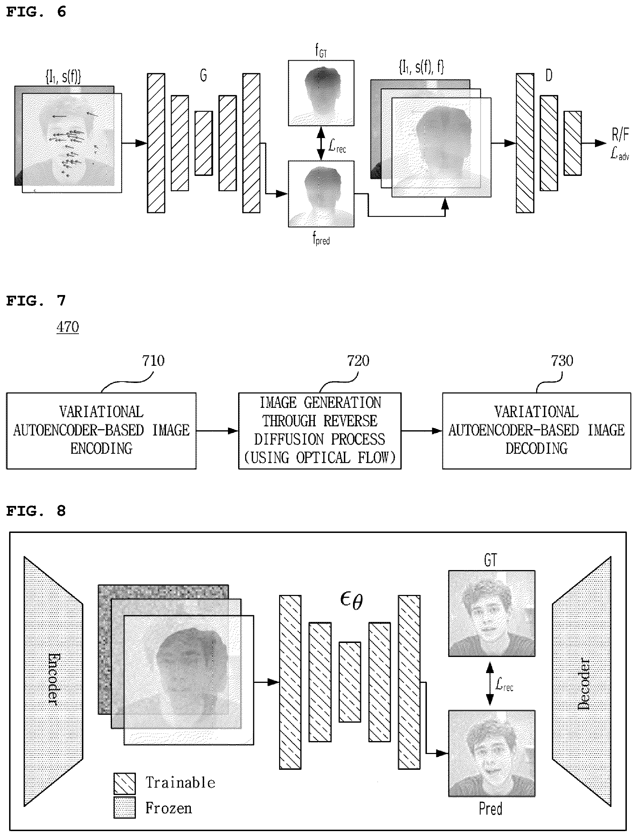

In connection with this, FIG. 6 is an exemplary diagram illustrating an embodiment of training FlowGen. As shown in FIG. 6, a generator G receives five input channels. In this case, three channels are intended for the input image $I_1$ and two channels are intended for the conditional sparse drag instruction $s(f)$. As the output, a two-channel dense optical flow is generated. The discriminator $D$ discriminates between real/fake (R/F) optical flows. Seven input channels are processed for this purpose, and the seven input channels include three channels for the input image $I_1$, two channels for the conditional sparse drag instruction $s(f)$, and two channels for the dense optical flow $f$. In order to ensure the robust training of the generator, i.e., to encourage the generator to be trained on a robust mapping from various sparse flow samples to dense flows, there is adopted a method in which the generator is updated four times by using randomly sampled flows for each update of the discriminator. $\mathcal{L}_{adv}$ ($G, D$), which is the adversarial loss function of FlowGen, and $\mathcal{L}_{rec}$ ($G$), which is a reconstruction loss function, are shown in Equation 1, as follows:

$$\mathcal{L}_{adv} = \mathbb{E}_{x,f}\left[\log D\left(x, f_s, f\right)\right] \\ + \mathbb{E}_{x,f}\left[\log\left(1 - D\left(x, f_s, G\left(x, f_s\right)\right)\right)\right]$$

$$\mathcal{L}_{rec} = \mathbb{E}_{x,f}\left[\left\|f - G\left(x, f_s\right)\right\|_2\right]$$

$$\mathcal{L}_{FlowGen} = \mathcal{L}_{adv} + \lambda\mathcal{L}_{rec} \tag{1}$$

where $x$ is an initial frame, $f$ is a dense optical flow, and $f_s$ is a sparse flow sampled using a sampler $S$ (i. e., $f_s = S(f)$).

As in the loss function defined above, the generator generates a fake synthetic optical flow based on an input image and a conditional drag input, and the discriminator is trained together through a process of distinguishing between the fake optical flow and a genuine optical flow. Furthermore, a reconstruction loss function, which is widely used in the Pix2Pix-series researches, is used, and a simple L2 loss function is used. The overall learning loss $\mathcal{L}_{FlowGen}$ is composed of a combination of the adversarial loss function and the reconstruction loss function.

Meanwhile, according to an embodiment, the diffusion model-based image generation module (FlowDiffusion) 470 may be a diffusion-based network for generating a motion-conditioned image.

As shown in FIGS. 7 and 8, FlowDiffusion may receive an input image and a generated optical flow as input, and may generate an image, in which the input image and the optical flow-conditioned motion are reflected, through a denoising process 720 based on the input image and the optical flow. All these processes are performed in the latent space of the image for efficiency, and the encoder 710 and decoder 730 of a pre-trained variational autoencoder (VAE) are used to project the image into the latent space.

The main difference of FlowDiffusion from Instruct-Pix2Pix (Tim Brooks et al. 2023. Instructpix2pix: Learning to follow image editing instructions. In IEEE Conference on Computer Vision and Pattern Recognition (CVPR).) is that an editing signal is encoded in an additional channel for a flow dimension, rather than a text prompt. While Instruct-Pix2Pix needs to reflect signals from both the text and image domains, FlowDiffusion needs to maintain consistency except for a dragged region and reflect only a dense flow, not text, therein. FlowDiffusion has the advantage of reducing the computational cost related with a text encoder.

FlowDiffusion serves to receive the optical flow generated by FlowGen and the input image and generate a final edited image. This is based on a diffusion model and uses a U-Net structure. In order to perform operations in the more efficient latent space of an image, the encoder and decoder of the pre-trained variational autoencoder may be included, and serve to project and restore a $3\times h\times w$ image into $4\times(h//8)\times(w//8)$ latent space. FlowDiffusion is trained on the diffusion model through the data defined in this latent space. The U-Net of FlowDiffusion receives 10 channels of input, in which case the 10 channels of input include 4 channels of latent noise, 4 channels of latent images, and 2 channels of optical flows. FlowDiffusion is based on Instruct-Pix2Pix, but the main difference of FlowDiffusion from Instruct-Pix2Pix is that it uses optical flow conditions instead of text input.

The loss function of FlowDiffusion is defined as shown in Equation 2 below:

$$\mathcal{L}_{FlowDiffusion} = \mathbb{E}_{\mathcal{E}(x),\mathcal{E}(c_I),c_F,\epsilon\sim\mathcal{N}(0,1),t}\left[\left\|\epsilon - \epsilon_\theta(z_t, t, \mathcal{E}(c_I), c_F)\right\|_2^2\right] \tag{2}$$

FlowDiffusion uses the noise estimation method of the diffusion model used in DDPM (Jonathan Ho et al. 2020. Denoising diffusion probabilistic models. In Conference on Neural Information Processing Systems (NeurIPS)). The controller 120 may train FlowDiffusion with the training performed to gradually remove noise required to restore an image from random noise based on an image and an optical flow. That is, FlowDiffusion operates in a manner that gradually removes noise required to restore an appropriate image from random noise by taking into consideration the input image and the optical flow representative of a motion.

Given the input conditions of $c_I$, $c_F$, $c_T$ having guidance scales $s_I$, $s_F$, $s_T$, the noise-added latent(noisy latent) $z_t$, and a score network $\varepsilon_\theta(z_t, c_I, c_F, c_T)$, the classifier-free guidance of FlowDiffusion using an optical flow may be written as Equation 3 below by explicitly indicating the text condition as $\varnothing$:

$$\tilde{\epsilon}_\theta(z_t, c_I, c_F, c_T) = \epsilon_\theta(z_t, \varnothing, \varnothing, \varnothing)$$
$$+ s_I \cdot [\epsilon_\theta(z_t, c_I, \varnothing, \varnothing) - \epsilon_\theta(z_t, \varnothing, \varnothing, \varnothing)]$$
$$+ s_F \cdot [\epsilon_\theta(z_t, c_I, c_F, \varnothing) - \epsilon_\theta(z_t, c_I, \varnothing, \varnothing)] \quad (3)$$

At a sampling point in time, the classifier-free guidance (Jonathan Ho et al. 2021. Classifier-Free Diffusion Guidance. In Conference on Neural Information Processing Systems (NeurIPS) Workshop.) is employed. In this case, $z_t$ is the noise-added latency(noisy latent), $c_I$ is the image condition, $c_F$ is the optical flow condition, and $s_I$ and $s_F$ are the guidance scales for the image and the flow, respectively. In this case, $c_T$ is not used in FlowDiffusion. The user may adjust $s_I$ representative of the intensity of the input image condition and $s_F$ representative of the intensity of the motion. When the input image condition is strongly applied, an image that better maintains the characteristics of the original image will be generated. When $s_F$ is increased, the motion generated from FlowGen will be strongly applied, resulting in the generation of an image having more motion. In the training process of FlowDiffusion, the image condition having a probability of 5% and the optical flow condition having a probability of 10% are dropped out, thereby preventing the model from being conditioned only for a flow without an image and thus improving the generalization performance of the model.

Meanwhile, according to an embodiment, the controller 120 may perform preprocessing on video learning data.

That is, the controller 120 preprocesses video data by obtaining a training dataset including a plurality of samples each consisting of two images, two masks, and optical flows based on random video data. FlowGen or FlowDiffusion may be trained using the preprocessed video data.

The main challenge in training a drag-dedicated model (i.e., $output = model(input, c_{drag})$) is the lack of a curated dataset consisting of triplets of an input image, an output image and a drag condition. Accordingly, in the present embodiment, a video dataset is utilized to learn natural motions. CelebV-Text (Yu et al. 2023. Celebv-text: A large-scale facial text-video dataset. In IEEE Conference on Computer Vision and Pattern Recognition (CVPR)), which is a large-scale facial video dataset, is utilized, and the following preprocessing process is performed. That is, 1) the controller 120 extracts a plurality of frames from the video. For example, the controller 120 may extract frames from the video at 10 fps. 2) The controller 120 samples image pairs at a maximum interval of 8 frames by using a sliding window technique. 3) The controller 120 extracts optical flows between the image pairs by using FlowFormer (Huang et al. 2022. Flowformer: A transformer architecture for optical flow. In European Conference on Computer Vision (ECCV). 4) The controller 120 generates an object mask. According to an embodiment, the controller 120 may rapidly generate an object mask by using YOLO (Redmon et al. 2016. You only look once: Unified, real-time object detection. In IEEE Conference on Computer Vision and Pattern Recognition (CVPR)).

It was confirmed that a certain level of generalization performance was achieved even when training was performed only with a face video dataset. However, in order to generalize performance in more complex scenes, the controller 120 provided with a short video of 10 to 60 seconds in length for relevant scenes may fine-tune FlowGen and FlowDiffusion through similar preprocessing using the corresponding data. The resulting dataset is composed of n pairs of samples, and each pair of samples may consist of two images (frame 1 and frame 2) $I1_i$ and $I2_i$, two masks $M1_i$ and $M2_i$, and an optical flow $f_i$ directing from one to another image (directing from frame 1 to 2). That is, the dataset consists of

$$\{I1_i, I2_i, M1_i, M2_i, f_i\}_{i=1}^n$$

. In order to train FlowGen and FlowDiffusion, the masked optical flow $f_i \cdot M1_i$ is used as ground truth (GT) to capture only the motion of an object.

Meanwhile, according to an embodiment, the controller 120 may extract pseudo drag instructions for training.

Random drag instructions are generated for the training of FlowGen by taking into consideration various drag input scenarios.

Since user inputs may range from a single point to an extensive set of points, efficient sampling is required. Accordingly, for example, 1) the controller 120 randomly initializes a sparse flow $f_s \in \mathbb{R}^{2 \times h \times w}$ by using a random vector field of a hxw size sampled from U(0,1) (uniform random distribution). That is, the sparse flow $f_s \in \mathbb{R}^{2 \times h \times w}$ may be initialized with random values sampled from U(0,1). 2) In order to extract a user drag instruction for a human face object, the controller 120 may assign $-\infty$ values to masked regions. 3) The controller 120 adds a $v_g$ value to a grid location and a $v_s$ value to a specific point (e.g., a face keypoint). $v_g$ and $v_s$ are randomly determined values for training by selecting characteristic significant points instead of randomly selecting drag points, and aim to give priority to a grid and specific points. In this case, the size of the grid plays an important role in preventing points from being selected only in a specific region. 4) The controller 120 selects points having top-k values in the field of hxw, and sets the rest to 0. In this case, k is also randomly selected from a predefined range. That is, top k points are selected from the sparse flow, and the rest are zeroed out. In this case, k is also randomly selected from a predefined range. Through this method, there may be learned various input scenarios ranging from single-point dragging to considerably detailed multiple dragging.

In connection with this, the controller 120 may use some dlib keypoints as special points for face videos, and may apply grid-based sampling when general scenes are fine-tuned.

In order to provide flexibility, various GAN configurations may be used according to a user's intention. For example, GAN configurations may be selected for single-point dragging, keypoint-based fine-grained motion editing, or extremely fine-grained editing such as hair.

User inputs may range from a single point to an extensive set of points, which are various. This wide variation may be handled by generating plausible motions.

Meanwhile, according to an embodiment, the controller 120 may maintain the background based on a mask operation. Background consistency may be applied for FlowDiffusion, and a generated image may be used for the training of FlowDiffusion as described below.

The difference between video generation and drag-based image editing models lies in the background. The video generation model requires that both the background and the object change as long as it is a natural motion, but the drag-based image editing technique requires that only the specific object dragged by the user moves. Unlike video generation, which allows any plausible motions, drag-based image editing requires a consistent background and allows motion only for the dragged object. Accordingly, the consistency of the background needs to be maintained for drag-based image editing.

In order to maintain the consistency of the background in the video data, data preprocessing based on mask operation is required. In the previous preprocessing process for the video training data, a module that unifies masks exclusive of objects in two image frames through an extracted mask is defined as a mask-based operation, which may be written as Equation 4 below. $I_{fg}$ is the image (including the object) to be the foreground, and $I_{bg}$ is the image to be used as the background. $M_{fg}$ and $M_{bg}$ are the object masks in the foreground and background images, respectively, and inv is the mask for the background, which is the inverted version of them. The goal is to generate a natural image by combining the object from $I_{fg}$ and the background from $I_{bg}$. Since the masks are not pixel-wise accurate, $M_{bg}$ is appropriately dilated to account for the inaccuracy of the masks. For example, $M_{bg}$ is dilated with a kernel of size (15, 15) so that the pixels from $I_{fg}$ are included in the borderline areas, and then binary inverted masks $M_{bg}^{inv} = 1 - M_{bg}^{dilated}$ and $M_{fg}^{inv} = 1 - M_{fg}$ are defined to hold 1 for the background and 0 for the object.

$$I_{fg}^{\text{new}} = I_{fg} \cdot M_{fg}$$

$$I_{bg}^{\text{new}} = (M_{bg}^{\text{inv}} \wedge M_{fg}^{\text{inv}}) \cdot I_{bg} + [1 - (M_{bg}^{\text{inv}} \vee M_{fg})] \cdot I_{fg}$$

$$I^{\text{new}} = I_{fg}^{\text{new}} + I_{bg}^{\text{new}}$$

$$(4)$$

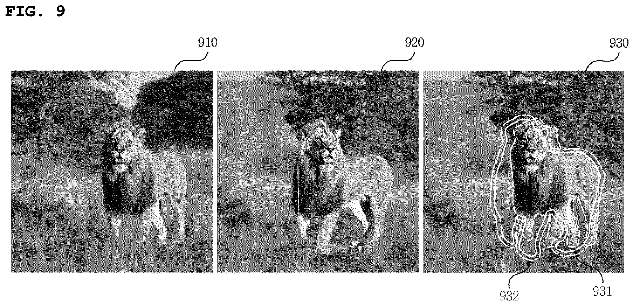

As shown in FIG. 9, an image 930 may be generated by taking an object from an image 910, taking a background from another image 920, and unifying the backgrounds. In this case, the solid line 931 in FIG. 9 is the mask of the image 920, and the alternated long and short dash line 932 represents a delated mask. When an actual diffusion model is trained, the model receives an image that has been subjected to the above mask-based operation as input and is trained to output the image 920 and the image 930. That is, data is received such that only the object moves while maintaining the background. In this case, the mask is only needed in the training phase and is not needed in the inference phase.

In connection with this, given a training dataset $\{I1_i, I2_i, M1_i, M2_i, f_i\}_{i=1}^{n}$, the cases of (1) filling the background of $I1_i$ with $I2_i$, (2) filling the background of $I2_i$ with $I1_i$, or (3) not applying background consistency at all may be taken into consideration as approaches to the background consistency. The case of (1) yielded the best results. When the diffusion model is trained on conditions for the optical flow $f$ moving from $I1_i$ to $I2_i$, $I1_i$ and $f$ are used as the conditions, and the loss is calculated between the model output and $I2_i$. Although the mask operation is generally robust, modifying the GT $I2_i$ could introduce small artifacts. In contrast, modifying the input condition $I1_i$ allows the model to handle and ignore these artifacts during the denoising process, resulting in a proper reconstruction of $I2_i$. That is, the controller 120 may generate an image in which the background of the first image $I1_i$, which is one of the two images that constitute the training dataset

$$\{I1_i, I2_i, M1_i, M2_i, f_i\}_{i=1}^{n}$$ , is filled with the second image $I2_i$, which is the remaining image, and may train FlowDiffusion by using a training dataset including a plurality of samples in each of which the first image is replaced with the generated image.

Meanwhile, according to an embodiment, the controller 120 may normalize the optical flow.

In order for FlowGen and FlowDiffusion to be effectively trained on conditions on the optical flow, the optical flow needs to be normalized to an appropriate scale. There are two normalization methods. A first normalization method is fixed-size normalization in which the optical flow is divided by the spatial dimensions and the optical flow is normalized by dividing it by the size of the image. A second normalization method is sample-wise normalization in which each channel is divided by the maximum absolute value of the flow vector of the corresponding channel. Fixed-size normalization maintains the actual size and scale, so that the numbers are directly proportional to the dimensions, but all samples are densely centered around 0, resulting in a very narrow distribution, whereas sample-wise normalization results in a relatively wide-spread distribution, so that it does not provide an indication of the actual flow size. Accordingly, sample-wise normalization is more effective for the training of FlowGen, and fixed-size normalization is more effective for the training of FlowDiffusion because the loss is calculated directly for the flows in FlowGen and information about the actual scale is important in FlowDiffusion. During inference, the sparse flow per sample is normalized, the largest absolute magnitude from the input sparse drag instruction is used to resize the sparse flow, and fixed-size normalization is applied before inputting to the diffusion model. Through this normalization process, the diffusion model is enabled to generate reasonable results for an optical flow without a special encoder network for optimization.

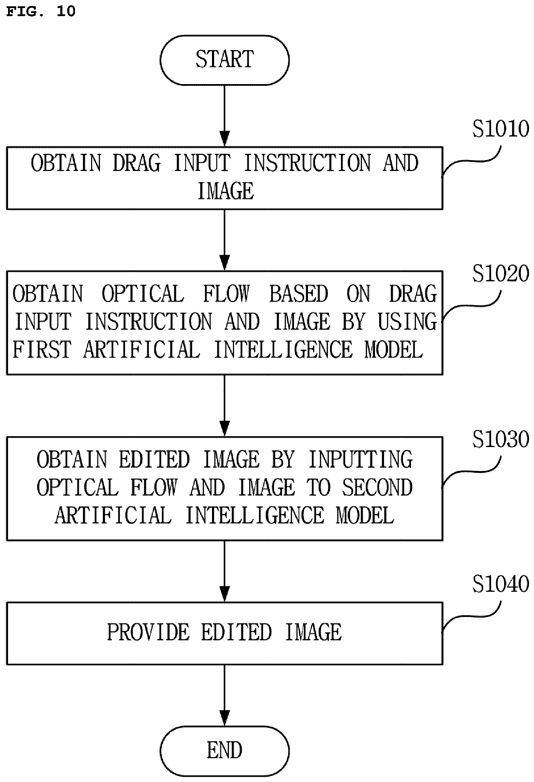

FIG. 10 is a flowchart illustrating an image editing method according to an embodiment.

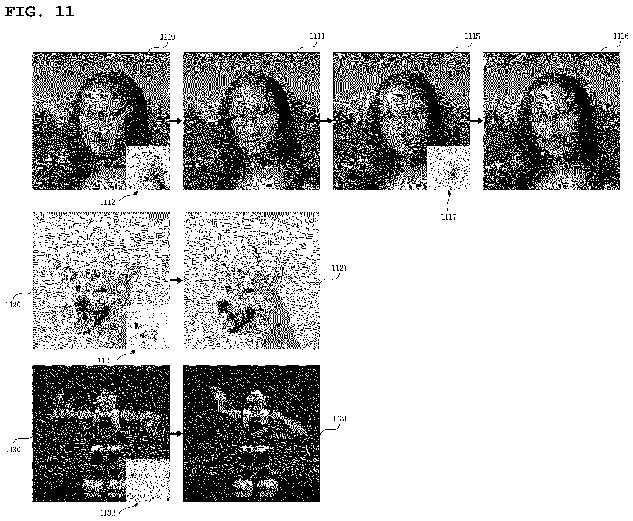

The image editing method according to the embodiment shown in FIG. 10 includes the steps that are processed in a time-series manner by the image editing apparatus shown in FIGS. 1 to 9. Accordingly, the descriptions that are omitted below but have been given above in conjunction with the image editing apparatus shown in FIGS. 1 to 9 may also be applied to the image editing method according to the embodiment shown in FIG. 10. FIG. 10 will be described below with reference to FIGS. 11 to 12. FIGS. 11 to 12 are exemplary diagrams illustrating an image editing method according to an embodiment.

As shown in FIG. 10, when the image editing apparatus 100 obtains a drag input instruction and an image in step S 1010, an optical flow may be obtained based on the drag input instruction and the image by using the first artificial intelligence model trained to receive a drag input instruction and an image as input and output an optical flow in step S 1020. In this case, the first artificial intelligence model refers to the same model as the FlowGen described above. Accordingly, in order to perform step S1020, the image editing apparatus 100 may train the first artificial intelligence model composed of the generator and discriminator of the GAN, and may train the first artificial intelligence model before the inference process of the image editing. According to an embodiment, the image editing apparatus 100 may train the first artificial intelligence model by allowing the generator to generate a fake synthetic optical flow based on the input image and a conditional drag input, and the discriminator to perform a process of distinguishing between the fake optical flow and a genuine optical flow. In addition, the training data used to train the first artificial intelligence model may be generated based on random video data. The image editing apparatus 100 may preprocess random video data. That is, the image editing apparatus 100 may obtain a training dataset including two images, two masks, and optical flows based on random video data. The video data preprocessed as described above may also be used to train the second artificial intelligence model to be described below.

When the image editing apparatus 100 obtains the optical flow, an edited image may be obtained by inputting the optical flow and the image to the second artificial intelligence model. In this case, the edited image refers to an image edited according to the drag input instruction for the original image for which the drag instruction is given. The optical flow is obtained as an output of the first artificial intelligence model, and the image editing apparatus 100 may perform fixed-size normalization on the optical flow output from the first artificial intelligence model and input it to the second artificial intelligence model. In connection with this, the second artificial intelligence model refers to the same object as FlowDiffusion. Before inferring the edited image by using the second artificial intelligence model, the image editing apparatus 100 may train the second artificial intelligence model. The image editing apparatus 100 may train the second artificial intelligence model to gradually remove the noise required to restore an image from random noise based on an image and an optical flow. According to an embodiment, the image editing apparatus 100 may perform both the step of training the first artificial intelligence model and the step of training the second artificial intelligence model before the inference process.

The image editing apparatus 100 may provide the edited image obtained from the second artificial intelligence model. In this case, providing may mean providing the edited image through the screen of the user terminal so that the user who input the drag can check it, or storing it in a user account.

It can be seen that the image editing apparatus 100 or the image editing method according to the embodiment disclosed in the present specification outputs an image 1111, 1116, 1121, or 1131 in which drag editing is reflected when a drag input instruction (a circle with diagonal line(s) (a drag start point(s)), a circle(s) (a drag end point(s)), and an arrow(s) (a drag direction(s))) is given for an input image 1110, 1115, 1120, or 1130, as shown in FIG. 11. For example, when a drag input instruction is given for the input image 1110, the image 1111 in which the instruction is reflected may be output. When, for the corresponding image 1111, another drag input instruction is given for the image 1115 identical to the image 1111, the image 1116 may be output. Furthermore, for example, when a drag input instruction is given for the input images 1120 and 1130, the images 1121 and 1131 are output. Through this, the user may obtain a drag-edited image completed naturally and rapidly. In this case, an example of each of the optical flows 1112, 1117, 1122, and 1132 when the result image 1111, 1116, 1121, or 1131 is output from each input image 1110, 1115, 1120, or 1130 is also shown in FIG. 11.

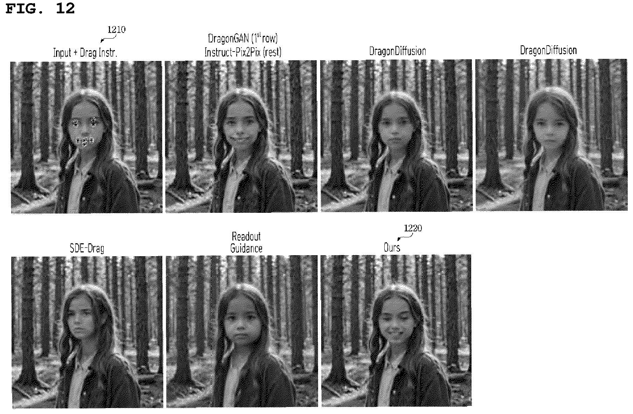

It can be seen that the image editing apparatus 100 or the image editing method according to the embodiment disclosed in the present specification outputs an image 1220 having the best quality when a drag input instruction (a circle with diagonal line(s) (a drag start point(s)), a circle(s) (a drag end point(s)), and an arrow(s) (a drag direction(s)); Input+Drag Instr.) is given for an input image 1210, as shown in FIG. 12.

The image editing apparatus 100 or the image editing method may perform high-quality editing at a high speed.

In connection with this, Table 1 below shows the evaluation results of the performance of individual drag-based editing techniques.

Table 1

| | Input | Time (s) | Mem. (GB) | PSNR (↑) | | SSIM (↑) | | LPIPS (↓) | | CLIP$^{img}$ (↑) | |
|---|---|---|---|---|---|---|---|---|---|---|---|
| | | | | O | E | O | E | O | E | O | E |
| DragDiffusion | Image, Drag, Prompt, Mask | 75.3 | 11.6 | 23.83 | **23.59** | 0.81 | **0.77** | <u>0.194</u> | **0.216** | **0.957** | <u>0.945</u> |
| DragonDiffusion | Image, Drag, Prompt, Mask | <u>11.0</u> | <u>6.6</u> | 21.53 | 21.26 | 0.80 | 0.74 | 0.233 | 0.260 | 0.895 | 0.891 |
| SDE-Drag | Image, Drag, Prompt, Mask | 53.0 | 7.4 | 15.71 | 15.40 | 0.68 | 0.61 | 0.347 | 0.389 | 0.666 | 0.665 |
| Readout Guidance | Image, Drag, Prompt | 55.4* | 19.2* | <u>25.44</u> | 21.26 | 0.87 | 0.71 | 0.205 | 0.289 | 0.892 | 0.885 |
| InstantDrag (Ours) | **Image, Drag** | **1.1** | **3.4** | **26.51** | <u>22.92</u> | <u>0.85</u> | <u>0.75</u> | **0.154** | <u>0.224</u> | **0.957** | **0.948** |

As image editing techniques to be compared with the embodiment disclosed in the present specification, there may be DragDiffusion (Yujun Shi et al. 2023. DragDiffusion: Harnessing Diffusion Models for Interactive Point-based Image Editing. arXiv preprint arXiv:2306.14435 (2023)), DragonDiffusion (Chong Mou et al. 2023. DragonDiffusion: Enabling Drag-style Manipulation on Diffusion Models. In International Conference on Learning Representations (ICLR)), SDE-Drag (Shen Nie et al. 2023. The Blessing of Randomness: SDE Beats ODE in General Diffusion- based Image Editing. In International Conference on Learning Representations (ICLR)), and Readout Guidance (Grace Luo et al. 2024. Readout Guidance: Learning Control from Diffusion Features. IEEE Conference on Computer Vision and Pattern Recognition (CVPR).). The evaluation was conducted using human face frames extracted from TalkingHead-1KH video data, 68 facial keypoints such as eyes, nose, and mouth were extracted from two different frames, and one was used as an input image and the other as a ground truth editing result. Drag input was generated using 68 keypoints. The type of input, time and memory required for editing, how faithfully a result reflects an original image, and the similarity with the ground truth frame were measured. Evaluation indices such as PSNR, SSIM, LPIPS, and CLIP Similarity Score are indices that measure structural similarity and perceptual similarity (perceptual distance) between two images. The higher the PSNR, SSIM, and CLIP Similarity Score, and the lower the LPIPS, the better the indices. O is the result between the input image and the edited image, and E is the comparison result between the GT correct frame and the edited image. In particular, the better the indices in the E column, the more likely it is that the editing was performed to resemble real motion. In this case, as can be seen in Table 1 above, the embodiment (InstantDrag) disclosed in the present specification was dozens of times faster than other techniques and used up to five times less memory.

The term "unit" used in the above-described embodiments means software or a hardware component such as a field-programmable gate array (FPGA) or application-specific integrated circuit (ASIC), and a "unit" performs a specific role. However, a "unit" is not limited to software or hardware. A "unit" may be configured to be present in an addressable storage medium, and also may be configured to run one or more processors. Accordingly, as an example, a "unit" includes components, such as software components, object-oriented software components, class components and task components, processes, functions, attributes, procedures, subroutines, segments in program code, drivers, firmware, microcode, circuits, data, a database, data structures, tables, arrays, and variables.

Components and a function provided in "unit(s)" may be coupled to a smaller number of components and "unit(s)" or divided into a larger number of components and "unit(s)."

In addition, components and "unit(s)" may be implemented to run one or more central processing units (CPUs) in a device or secure multimedia card.

The image editing method according to an embodiment may be implemented in the form of a computer-readable medium that stores instructions and data that can be executed by a computer. In this case, the instructions and the data may be stored in the form of program code, and may generate a predetermined program module and perform a predetermined operation when executed by a processor. Furthermore, the computer-readable medium may be any type of available medium that can be accessed by a computer, and may include volatile, non-volatile, separable and non-separable media. Furthermore, the computer-readable medium may be a computer storage medium. The computer storage medium may include all volatile, non-volatile, separable and non-separable media that store information, such as computer-readable instructions, a data structure, a program module, or other data, and that are implemented using any method or technology. For example, the computer storage medium may be a magnetic storage medium such as an HDD, an SSD, or the like, an optical storage medium such as a CD, a DVD, a Blu-ray disk or the like, or memory included in a server that can be accessed over a network.

Furthermore, the image editing method according to an embodiment may be implemented as a computer program (or a computer program product) including computer-executable instructions. The computer program includes programmable machine instructions that are processed by a processor, and may be implemented as a high-level programming language, an object-oriented programming language, an assembly language, a machine language, or the like. Furthermore, the computer program may be stored in a tangible computer-readable storage medium (for example, memory, a hard disk, a magnetic/optical medium, a solid-state drive (SSD), or the like).

Accordingly, the image editing method according to an embodiment may be implemented in such a manner that the above-described computer program is executed by a computing apparatus. The computing apparatus may include at least some of a processor, memory, a storage device, a high-speed interface connected to memory and a high-speed expansion port, and a low-speed interface connected to a low-speed bus and a storage device. These individual components are connected using various buses, and may be mounted on a common motherboard or using another appropriate method.

In this case, the processor may process instructions within a computing apparatus. An example of the instructions is instructions which are stored in memory or a storage device in order to display graphic information for providing a Graphic User Interface (GUI) onto an external input/output device, such as a display connected to a high-speed interface. As another embodiment, a plurality of processors and/or a plurality of buses may be appropriately used along with a plurality of pieces of memory. Furthermore, the processor may be implemented as a chipset composed of chips including a plurality of independent analog and/or digital processors.

Furthermore, the memory stores information within the computing device. As an example, the memory may include a volatile memory unit or a set of the volatile memory units. As another example, the memory may include a non-volatile memory unit or a set of the non-volatile memory units. Furthermore, the memory may be another type of computer-readable medium, such as a magnetic or optical disk.

In addition, the storage device may provide a large storage space to the computing device. The storage device may be a computer-readable medium, or may be a configuration including such a computer-readable medium. For example, the storage device may also include devices within a storage area network (SAN) or other elements, and may be a floppy disk device, a hard disk device, an optical disk device, a tape device, flash memory, or a similar semiconductor memory device or array.

The above-described embodiments are intended for illustrative purposes. It will be understood that those having ordinary knowledge in the art to which the present invention pertains can easily make modifications and variations without changing the technical spirit and essential features of the present invention. Therefore, the above-described embodiments are illustrative and are not limitative in all aspects. For example, each component described as being in a single form may be practiced in a distributed form. In the same manner, components described as being in a distributed form may be practiced in an integrated form.

The scope of protection pursued through the present specification should be defined by the attached claims, rather than the detailed description. All modifications and variations which can be derived from the meanings, scopes and equivalents of the claims should be construed as falling within the scope of the present invention.

**Claims**

1. An image editing apparatus comprising:

   an input/output interface configured to obtain a drag input instruction and an image; and
   a controller configured to obtain an optical flow based on the drag input instruction and the image by using a first artificial intelligence model that is trained to receive a drag input instruction and an image as input and output an optical flow, to input the optical flow and the image to a second artificial intelligence model that is different from the first artificial intelligence model, thereby obtaining an edited image as an output of the second artificial intelligence model, and to provide the edited image.

2. The image editing apparatus of claim 1, wherein the controller trains the first artificial intelligence model including a generator and discriminator of a generative adversarial network (GAN), with the first artificial intelligence model being trained by allowing the generator to generate a fake synthetic optical flow based on the input image and a conditional drag input and the discriminator to perform a process of distinguishing between the fake optical flow and a genuine optical flow.

3. The image editing apparatus of claim 2, wherein the controller obtains a training dataset including a plurality of samples each including two images, two masks, and optical flows based on random video data, thereby preprocessing the video data, and trains the first artificial intelligence model by using the preprocessed video data.

4. The image editing apparatus of claim 3, wherein the controller generates an image by filling a background of a first image, which is one of the two images, with a second image, which is a remaining image, and trains the second artificial intelligence model by using a training dataset that includes a plurality of samples each constructed by replacing the first image with the generated image.

5. The image editing apparatus of claim 1, wherein the controller trains the second artificial intelligence model based on a diffusion model, with the second artificial intelligence model being trained to gradually remove noise required to restore an image from random noise based on the image and the optical flow.

6. The image editing apparatus of claim 1, wherein the controller performs fixed-size normalization on the optical flow from the first artificial intelligence model and inputs the normalized optical flow to the second artificial intelligence model.

7. The image editing apparatus of claim 1, wherein the controller generates a random drag input instruction based on a sparse flow $f_s \in \mathbb{R}^{2 \times h \times w}$ initialized with random values sampled from U(0, 1), and trains the first artificial intelligence model by using the generated random drag input instruction.

8. The image editing apparatus of claim 1, wherein the controller performs sample-wise normalization on the optical flow when training the first artificial intelligence model, and performs fixed-size normalization on the optical flow when training the second artificial intelligence model.

9. An image editing method, the image editing method being performed by an image editing apparatus, the image editing method comprising:

   obtaining a drag input instruction and an image;
   obtaining an optical flow based on the drag input instruction and the image by using a first artificial intelligence model that is trained to receive a drag input instruction and an image as input and output an optical flow;
   inputting the optical flow and the image to a second artificial intelligence model that is different from the first artificial intelligence model, thereby obtaining an edited image as an output of the second artificial intelligence model; and
   providing the edited image.

10. The image editing method of claim 9, further comprising training the first artificial intelligence model including a generator and discriminator of a generative adversarial network (GAN), with the first artificial intelligence model being trained by allowing the generator to generate a fake synthetic optical flow based on the input image and a conditional drag input and the discriminator to perform a process of distinguishing between the fake optical flow and a genuine optical flow.

11. The image editing method of claim 10, wherein training the first artificial intelligence model comprises obtaining a training dataset including a plurality of samples each including two images, two masks, and optical flows based on random video data, thereby preprocessing the video data, and training the first artificial intelligence model by using the preprocessed video data.

12. The image editing method of claim 9, further comprising training the second artificial intelligence model based on a diffusion model, with the second artificial intelligence model being trained to gradually remove noise required to restore an image from random noise based on the image and the optical flow.

13. The image editing method of claim 9, wherein obtaining the optical flow comprises performing fixed-size normalization on the optical flow from the first artificial intelligence model.

14. A non-transitory computer-readable storage medium having stored thereon a program that, when executed by a processor, causes the processor to execute the image editing method set forth in claim 9.

15. A computer program that is executed by an image editing apparatus and stored in a non-transitory computer-readable storage medium to perform the image editing method set forth in claim 9.

**FIG. 1**

100

10

NETWORK

20

**FIG. 2**

100

| INPUT/OUTPUT INTERFACE | 110 |
| CONTROLLER | 120 |
| COMMUNICATION INTERFACE | 130 |
| MEMORY | 140 |

**FIG. 3**

FlowGen

f

Image.
User Drag Instruction

FlowDiffusion

I

I'

**FIG. 4**

411

| DRAG INSTRUCTION |

450

| OPTICAL FLOW GENERATION MODULE |

470

| DIFFUSION MODEL-BASED IMAGE GENERATION MODULE |

490

| EDITED IMAGE |

| INPUT IMAGE |

410

**FIG. 5**

450

510

| USER INPUT PROCESSING |

520

| OPTICAL FLOW GENERATION |

530

| OPTICAL FLOW NORMALIZATION |

**FIG. 6**

**FIG. 7**

470

| 710 | 720 | 730 |
|---|---|---|
| VARIATIONAL AUTOENCODER-BASED IMAGE ENCODING | IMAGE GENERATION THROUGH REVERSE DIFFUSION PROCESS (USING OPTICAL FLOW) | VARIATIONAL AUTOENCODER-BASED IMAGE DECODING |

**FIG. 8**

FIG. 9

FIG. 10

```
              ┌─────────┐
              │  START  │
              └─────────┘
                   │
                   ▼
    ┌──────────────────────────────────┐        S1010
    │ OBTAIN DRAG INPUT INSTRUCTION AND │
    │             IMAGE                 │
    └──────────────────────────────────┘
                   │
                   ▼
    ┌──────────────────────────────────┐        S1020
    │ OBTAIN  OPTICAL  FLOW  BASED  ON  DRAG │
    │ INPUT  INSTRUCTION  AND  IMAGE  BY  USING │
    │ FIRST  ARTIFICIAL  INTELLIGENCE  MODEL │
    └──────────────────────────────────┘
                   │
                   ▼
    ┌──────────────────────────────────┐        S1030
    │ OBTAIN  EDITED  IMAGE  BY  INPUTTING │
    │ OPTICAL  FLOW  AND  IMAGE  TO  SECOND │
    │ ARTIFICIAL  INTELLIGENCE  MODEL   │
    └──────────────────────────────────┘
                   │
                   ▼
    ┌──────────────────────────────────┐        S1040
    │       PROVIDE  EDITED  IMAGE       │
    └──────────────────────────────────┘
                   │
                   ▼
              ┌─────────┐
              │   END   │
              └─────────┘
```

FIG. 11

FIG. 12

Input + Drag Instr. 1210

DragonGAN (1st row)
Instruct-Pix2Pix (rest)

DragonDiffusion

DragonDiffusion

SDE-Drag

Readout
Guidance

Ours 1220

Europäisches
Patentamt

European
Patent Office

Office européen
des brevets

# EUROPEAN SEARCH REPORT

**Application Number**

EP 24 21 1368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MUYAO NIU ET AL: "MOFA-Video: Controllable Image Animation via Generative Motion Field Adaptions in Frozen Image-to-Video Diffusion Model", ARXIV.ORG, CORNELL UNIVERSITY LIBRARY, 201 OLIN LIBRARY CORNELL UNIVERSITY ITHACA, NY 14853, 11 July 2024 (2024-07-11), XP091812017, | 1,5-9, 12-15 | INV. G06T11/60 |
| Y | * abstract; figures 1, 2 * <br> * section 3.3 "Inferences" * <br> * section 3.2, par. 2 * <br> * page 8, paragraph 1 - paragraph 2 * <br> * page 9, last paragraph * <br> ----- | 2,3,10, 11 | |
| A | Blattmann Andreas ET AL: "Stable Video Diffusion: Scaling Latent Video Diffusion Models to Large Datasets", arXiv.org, 1 November 2023 (2023-11-01), pages 1-30, XP093271639, Retrieved from the Internet: URL:https://arxiv.org/pdf/2311.15127 * the whole document * <br> ----- | 1-15 | |
| Y | US 2024/005587 A1 (KULKARNI KULDEEP [IN] ET AL) 4 January 2024 (2024-01-04) | 2,3,10, 11 | |
| A | * abstract * <br> * paragraphs [0050], [0053], [0058] * <br> ----- | 1,4-9, 12-15 | |
| A | FANGNENG ZHAN ET AL: "Multimodal Image Synthesis and Editing: A Survey and Taxonomy", ARXIV.ORG, CORNELL UNIVERSITY LIBRARY, 201 OLIN LIBRARY CORNELL UNIVERSITY ITHACA, NY 14853, 5 August 2023 (2023-08-05), XP091578907, * the whole document * <br> ----- | 1-15 | |

TECHNICAL FIELDS SEARCHED (IPC)

G06T

-/--

The present search report has been drawn up for all claims

| Place of search | Date of completion of the search | Examiner |
|---|---|---|
| Munich | 22 April 2025 | Rodes Arnau, Isabel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 21 1368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUKI ENDO: "User-Controllable Latent Transformer for StyleGAN Image Layout Editing", ARXIV.ORG, CORNELL UNIVERSITY LIBRARY, 201 OLIN LIBRARY CORNELL UNIVERSITY ITHACA, NY 14853, 26 August 2022 (2022-08-26), XP091302927, * the whole document * | 1-15 | |
| | ----- | | |
| | | | **TECHNICAL FIELDS SEARCHED (IPC)** |

The present search report has been drawn up for all claims

| Place of search | Date of completion of the search | Examiner |
|---|---|---|
| Munich | 22 April 2025 | Rodes Arnau, Isabel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 1368

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2025

| Patent document cited in search report | Publication date | Patent family member(s) | Publication date |
|---|---|---|---|
| US 2024005587 A1 | 04-01-2024 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140120628

**Non-patent literature cited in the description**

- Artificial Intelligence Graduate School Program (Seoul National University). Information, Communications and Broadcasting Innovative Talent Nurturing Project. Korean Ministry of Science and ICT and the Institute of Information & Communications Technology Planning & Evaluation
- **ISOLA et al.** Image-To-Image Translation With Conditional Adversarial Networks. *IEEE Conference on Computer Vision and Pattern Recognition (CVPR)*, 2017
- **TIM BROOKS et al.** Instructpix2pix: Learning to follow image editing instructions. *IEEE Conference on Computer Vision and Pattern Recognition (CVPR)*, 2023
- **JONATHAN HO et al.** Denoising diffusion probabilistic models. *Conference on Neural Information Processing Systems (NeurIPS)*, 2020
- **JONATHAN HO et al.** Classifier-Free Diffusion Guidance. *Conference on Neural Information Processing Systems (NeurIPS) Workshop*
- **YU et al.** Celebv-text: A large-scale facial text-video dataset. *IEEE Conference on Computer Vision and Pattern Recognition (CVPR)*, 2023
- **HUANG et al.** Flowformer: A transformer architecture for optical flow. *European Conference on Computer Vision (ECCV)*, 2022
- **REDMON et al.** You only look once: Unified, real-time object detection. *IEEE Conference on Computer Vision and Pattern Recognition (CVPR)*, 2016
- **YUJUN SHI et al.** DragDiffusion: Harnessing Diffusion Models for Interactive Point-based Image Editing. *arXiv preprint arXiv:2306.14435*, 2023
- **CHONG MOU et al.** DragonDiffusion: Enabling Drag-style Manipulation on Diffusion Models. *International Conference on Learning Representations (ICLR)*, 2023
- **SHEN NIE et al.** The Blessing of Randomness: SDE Beats ODE in General Diffusion- based Image Editing. *International Conference on Learning Representations (ICLR)*, 2023
- **GRACE LUO et al.** Readout Guidance: Learning Control from Diffusion Features. *IEEE Conference on Computer Vision and Pattern Recognition (CVPR)*, 2024